# EUROPEAN PATENT SPECIFICATION

(11) **EP 1 549 871 B1**
(45) Date of publication and mention of the grant of the patent: **25.10.2006**
(21) Application number: 03755377.3
(22) Date of filing: 19.05.2003
(51) Int. Cl.: F16K 17/38

(54) **COMBINATION THERMAL AND PRESSURE RELIEF VALVE**
WÄRME- UND DRUCKENTLASTUNGSKOMBINATIONSVENTIL
COMBINAISON D'UNE SOUPAPE DE SURPRESSION THERMIQUE ET D'UNE SOUPAPE DE SURETE A PRESSION

(30) Priority: 24.05.2002 US 155845
(43) Date of publication of application: 06.07.2005
(73) Proprietor: SCHRADER-BRIDGEPORT INTERNATIONAL, INC., Denver, CO 80209 (US)
(72) Inventor: SCHULTZ, Jeffrey, A., Pitsville, VA 24139 (US); SCARBOROUGH, Scott, M., Altavista, VA 24517 (US)
(74) Representative: Bayliss, Geoffrey Cyril
(86) International application number: PCT/US2003/015655
(87) International publication number: WO 2003/100305

(56) References cited:
- WO-A-01/01026
- WO-A-02/01099
- US-A- 2 295 154
- US-A- 2 697 915
- US-A- 3 618 627
- US-A- 5 632 297
- US-A- 6 006 774

## Description

The present invention relates to relief devices, and more specifically, to relief valves that provide pressure relief to a pressurized fluid within a container or canister when a predetermined temperature or pressure is exceeded.

Containers or vessels that contain a gas or liquid commodity under pressure may be equipped with relief valves to prevent a rupturing of the container due to excessive pressures or temperatures. Such relief valves will allow a resulting excess pressure to escape.

Several types of relief devices have been used to prevent excess pressure from building within a container. One device is a fitting that includes a fusible plug that blocks and seals an outlet passage in the container. Once the temperature surrounding the container reaches the yield point of the fusible plug, the plug melts and pressure forces the melted plug out through the passage, thus allowing the pressure in the container to escape. A problem may arise, however, in that the fusible plug may extrude over time when exposed to high pressures. This failure in turn may cause a pressure leak path. Therefore, this type of fusible plug may not be able to be used with containers containing commodities that normally are under higher pressures, thus limiting the types of commodities that may be used with the plug. Moreover, while the fusible plug may be effective when excessive thermal conditions are experienced, the fusible plug generally is not effective under excessive pressure conditions.

Another solution has been to use two relief devices: a pressure relief valve for when excessive pressures are experienced and a thermal fuse for when thermal relief is needed. In addition to the problems described above with respect to the fusible plug, this solution provides the disadvantage of requiring a container adapted for two relief devices.

Accordingly, it would be desirable to have a relief device that provides both pressure and thermal relief that overcomes the disadvantages and limitations described above.

US-A-5632297 discloses a relief device for a pressurised vessel including a body having an inlet, an outlet and a fluid flow passageway between the inlet and outlet. The body further includes a fluid escape passage having a member therein which is porous to gases and liquids but not to solids and a plug of fusible material which melts at a predetermined temperature positioned adjacent to the porous member. A first piston is positioned in the fluid flow passageway and is normally biased into a sealing relationship with the inlet. The second position is positioned in the fluid escape passage and is normally biased against and applies a compressive force on the plug of fusible material. The plug is held in place adjacent the porous member by the compressive force of a stacked series of belleville springs which act simultaneously on the first piston positioned in the gas flow passage and a second piston engaging the fusible plug. By having the spring biased against a piston and not the thermal element itself, forces on the thermal plug are reduced and it becomes possible to position the thermal plug out of the gas flow passage.

WO-A-02/01099 discloses a safety valve for a vehicle tank designed to contain a gas fluid under pressure such as LPG. The valve consists of a hollow body in which a spring cooperates at one end with a closing gate. The safety valve comprises means for rating pressure loads applied against the spring at its other end, ejectable means for closing the hollow body and means for derating the spring to enable the pressurised gas fluid to be released outside. The rating means consists of a perforated screw screwed into the body. The derating means consists of a fusible material in the form of a thermally destructible washer.

US-A-2697915 discloses a safety valve for a vehicle tank designed to contain a gas fluid under pressure such as LPG. The valve consists of a hollow body having an inlet conduit at one end controlled by a valve against which a spring acts to hold the valve closed until the pressure against the valve exceeds the resistance provided by the spring. The other end of the spring acts against a fusible element located in the valve body. Under normal conditions the spring controls the opening of the valve when excess pressure is applied to the valve to provide controlled release of pressure from the container. In the event that the valve is exposed to elevated temperatures over a prolonged period, the fusible element can melt allowing the valve to open fully and relieve internal pressure from the vessel to atmosphere.

This invention provides a combination thermal and pressure relief valve, comprising a first housing having an opening at a first end and a pathway extending towards the opening from a second end of the first housing, a second housing partially received in the opening of the first housing, the first and the second housing defining a chamber adjacent the pathway, an exitway extending from the chamber and providing an exit to an exterior of the valve, a bearing element within the chamber and adjacent the pathway, the bearing element being larger then the width of the pathway, a spring under compression within the chamber and in line with the bearing element, and a thermal element within the chamber between the second housing and the spring, the thermal element being in line with the spring and melting at a predetermined temperature, the thermal element not blocking any exit to an exterior of the valve when the valve is unactuated, wherein the spring is biased against the thermal element when the valve is unactuated and exerts a force on the bearing element such that the bearing element is biased against the pathway and forms a seal between the chamber and the pathway.

In one arrangement according to the invention the second housing further includes an opening, and wherein the openings of the first and the second housings define the chamber.

In a preferred arrangement the exitway is adjacent the second housing.

In accordance with a further feature the bearing element includes at least in part a sealing element, the sealing element being adjacent to the pathway.

In the latter arrangement the bearing element may further comprise a pin adjacent to the sealing element.

More specifically the pin may be adjacent the spring.

Furthermore, the pin may further include a head having a receptacle that receives the sealing element.

It is preferred that the pin is made of brass.

It is further preferred that the thermal element is made of a eutectic material.

For example the thermal element may be made of a low melting-point alloy.

According to a further feature of the invention the first housing includes interior threads and the second housing includes exterior threads that engage with the interior threads of the first housing.

Preferably the first housing and the second housing are made of brass.

The foregoing and other features and advantages will become further apparent from the following detailed description of the presently preferred embodiments, read in conjunction with the accompanying drawings in which:
FIG. 1 is an embodiment of a combination thermal and pressure relief valve incorporated as an appurtenance to a pressurized container;
FIG. 2 is a side view of an embodiment of the combination thermal and pressure relief valve with a portion of the valve removed;
FIG. 3 is a second embodiment of the valve of FIG. 2; and
FIG. 4 is a third embodiment of the valve of FIG. 3

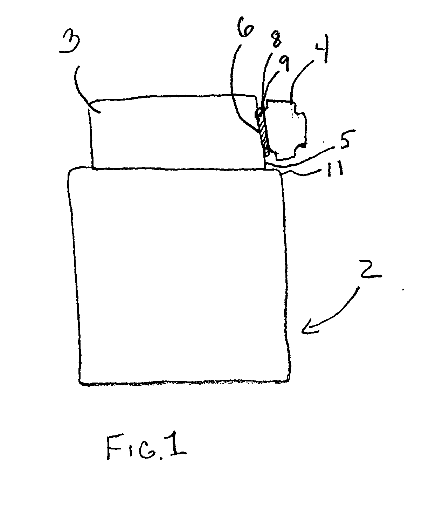

Turning now to the drawings, FIG. 1 illustrates one embodiment of a container 2 having a combination pressure relief valve and thermal pressure fuse 4 (hereinafter called "the valve"). The container preferably holds a liquid or gaseous fluid (not shown) under pressure. The pressure within the container 2 may build due to excessive temperature or pressure conditions. The valve 4, as will be more fully described below, provides pressure relief when a predetermined pressure or temperature is reached, thus preventing damage to the container or fluid.

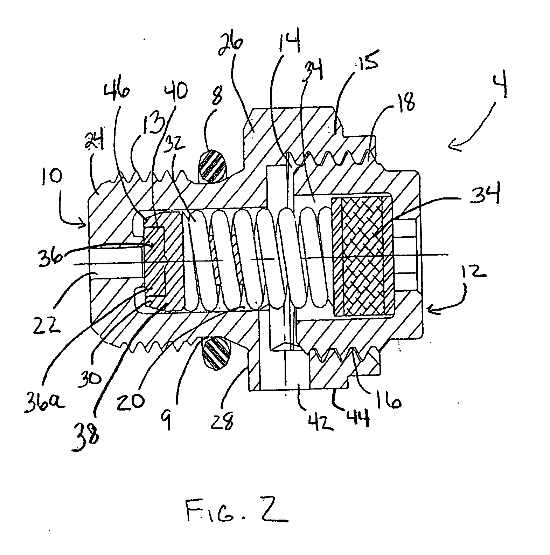

The valve 4 is incorporated into an opening 6 in a manifold 3 of the container 2, preferably by having exterior threads 13 (FIG. 2) on the valve 4 engage with interior threads (not shown) on the manifold 3. The manifold, in turn, is in fluid communication with the container such that the fluid may travel freely between the manifold and container. Preferably, the manifold 3 is attached to a top portion 11 of the container 2. Although not required, a seal 8 such as an O-ring may be located around an outer surface 9 of the valve 4 and adjacent an exterior wall 5 of the manifold 3. The seal 8 provides a sealing action between the manifold 3 and the valve 4.

Referring to FIG. 2, the valve 4 preferably include a first housing 10 and a second housing 12. The first housing 10 includes a first end 15, a second end 24 opposite the first end, and a pathway 22 that extends from a second end 24 of the first housing 10 towards the first end 15. The pathway 22 is thus positioned so that it leads into and is in fluid communication with the manifold 3 (FIG. 1).

The second housing 12 is received in part within an opening 14 at the first end 15 of the first housing 10 (i.e., a portion less than the entire second housing 12 is received within the opening 14). In a preferred embodiment, the first housing 10 preferably includes interior threads 16 that engage with exterior threads 18 on the second housing, although in other embodiments the first and second housings may be otherwise attached, such as through the use of fasteners or the like.

The first housing 10 preferably is made of brass, although in other embodiments, the first housing may be made of steel, an aluminum alloy, or any other type of suitable alloy. In the present embodiment, the second housing 12 is also made of brass, but, as with the first housing, may also be made of steel, an aluminum alloy, or other alloy. Moreover, and as will be seen further below, the second housing may be also be made from a fusible material.

When the valve is incorporated as an appurtenance to a container such as the container 2 of FIG. 1, the second end 24 of the first housing 10 is within the opening 6 of the manifold 3 such that the pathway 22 leads into the interior of the manifold. The second housing and a remaining portion 26 of the first housing is outside of the container. Preferably, the portion 26 of the first housing outside of the container 2 includes a shoulder 28 that abuts the exterior wall 5 of the manifold.

The opening 14 of the first housing includes an exitway 42 that extends from the opening 14 through an outerwall 44 of the first housing such that the exitway 42 leads to the area outside of the valve 4. Preferably, the exitway is located along the portion 26 of the first housing between the shoulder 28 and the second housing 12.

The first and the second housings 10, 12 define a chamber 20. Preferably, the second housing 12 also has an opening 34 so that when the second housing 12 is received by the first housing 10, the openings 14, 34 of the first and second housings together define the chamber 20 adjacent the pathway 22. As shall be described further below, when the valve is in an actuated state, i.e., when the valve provides thermal or pressure relief, the chamber and the pathway are in fluid communication.

A bearing element 30, a spring 32, and a thermal element 34 are located within the chamber 20. The bearing element 30 is adjacent the pathway 22. As described in more detail below, at least a portion 36 of the bearing element 30 is made of a sealing material that is adjacent the pathway 22. In alternate embodiments, the bearing element 30 may be entirely made of a sealing material. The remainder of the bearing element 30 acts as a bearing surface that has a force exerted upon it by the spring 22.

Most preferably, and as shown in FIG. 2, the bearing element 30 includes a sealing member 36a adjacent the pathway and a pin 38 adjacent the sealing member 36. The sealing member 36a should be larger than the pathway 22. By way of example to illustrate the meaning of "larger", if the sealing member 36a and the pathway 22 are both circularly shaped, the diameter of the sealing member should be greater than, and thus larger than, the diameter of the pathway.

A head 46 of the pin 38 acts a surface against which the spring 22 is biased when the valve 4 is in an unactuated state. Although not required, the head 46 of the pin 38 preferably has a receptacle 40 within which the sealing member 36a resides. In a preferred embodiment, the pin 38 is made of brass, although in other embodiments the pin may be made of other material such as those described for the first and the second housings.

Note that the bearing element 30 is shaped so that while it acts as a seal against the pathway 22, it does not act as a seal within the chamber 20. In embodiments that incorporate a pin 38, the head 46 of the pin 38 preferably is hexagonally shaped to allow gas or fluid to flow through the chamber. In other embodiments, of course, the bearing element may be otherwise shaped so long as it allows flow through the chamber.

The spring 32 is located adjacent the pin 38 and under normal conditions, when the valve 4 is in a non-actuated state, the spring 32 is under compression and bears against the pin 38 and the sealing member 36a. Thus, under normal conditions the spring 32 biases the pin 38 and the sealing member 36a against the pathway 22. The sealing member thus acts as a seal between the pathway 22 and the chamber 20.

Preferably, the spring 32 is a stainless steel spring, although the spring may also be made of silicon steel, a spring steel, or other suitable material that reduces the occurrence of failures such as fracture or creep failures. The spring material used may also depend on the type of fluid within the container, so that failures resulting from incompatibilities between the spring and the fluid, such as corrosion, may be reduced. Moreover, the load of the spring will be dependent on the thermal and pressure relief requirements associated with the fluid.

The thermal element 34 preferably is made from a eutectic material, and more preferably is a eutectic material made from a bismuth or tin alloy. In preferred embodiments, the thermal element 34 is placed at an end 40 of the chamber 20 opposite the bearing element 30 and adjacent the spring 32. In additional embodiments, by way of example, the thermal element may be placed between the spring and the bearing element. In embodiments that incorporate a sealing element and a pin, the thermal element may be placed between the pin and the sealing element. In general, the position of the thermal element 34 within the chamber 20 is unimportant so long as it is in-line with the spring 32 so that under normal conditions (i.e., when the valve is in an unactuated state) the spring will be biased against the thermal element.

Although the thermal element is normally made of a eutectic material, it may also be made of other materials having a low-melting point, the melting point being determined by the thermal relief requirements associated with the fluid. Examples include, but are not limited to, solders or low melting-point alloys.

Operation of the valve will now be described, with operation of the valve when thermal relief is needed being described first. As noted above, and in conjunction with FIG. 1, the valve 4 is incorporated into the opening 6 in the manifold 3, which is attached to the container 2 containing a gaseous or liquid fluid. Under normal conditions, the spring 32 is under compression and exerts a force against the bearing element 30 so as form a seal between the pathway 22 and the chamber 20. Thus, under normal conditions, the spring 32 biases the bearing element 30 against the pathway 22. The thermal element 34 is located in-line with the spring 32.

The thermal element 34 has a melting point that will cause it to melt, or lose its solid properties, when a predetermined temperature within the container 2 is reached. When this occurs, the thermal element melts, causing the spring 32 to decompress into the area previously occupied by the thermal element 34. When the spring 32 decompresses, the bearing element 30 is no longer biased against the pathway 22. Thus, the excess thermal pressure is able to enter from the pathway 22 and into the chamber 20, and exit through the exitway 42. The valve 4, therefore, provides for thermal relief and prevents damage to the container and/or fluid.

As noted above, the valve 4 also provides relief when a predetermined pressure is reached. The pressure within the container 2 enters the pathway 22 and applies a force against the bearing element 30. When the pressure in the container rises to the predetermined pressure, the pressure against the bearing element 30 exceeds the load of the spring 32. The spring 32 is thus further compressed and the bearing element 30 is no longer biased against the pathway 22. The excess pressure thus is able to enter into the chamber 20 and exit out the exitway 42.

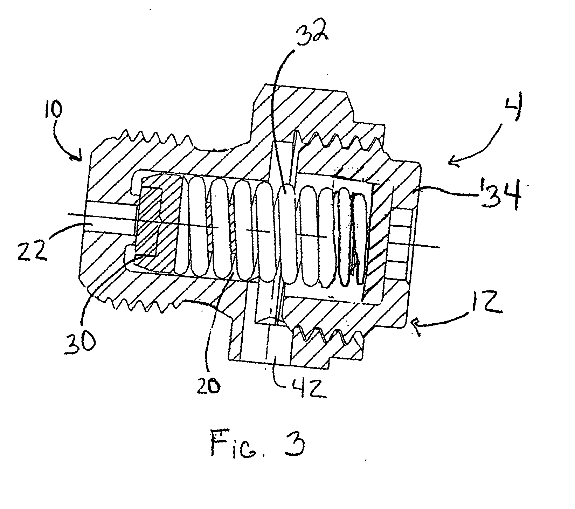

FIG. 3 illustrates an additional embodiment of the valve 4. The numbering of the elements of the drawing is the same as that of FIG. 2, except with differences noted with a prime (') designation. In this embodiment, the second housing 12 performs the function of the thermal element '34. The spring 32 is thus in-line, and typically adjacent to, the second housing 12. When the predetermined temperature is reached, the second housing 12 begins to melt. The spring 32 decompresses into the area previously occupied by the second housing. As described above for the previous embodiment, the bearing element 30 is no longer biased against the pathway 22. Thus, the excess thermal pressure may enter the chamber 20 and exit through the exitway 42. The operation of the valve 4 with respect to pressure relief is generally the same as that described above.

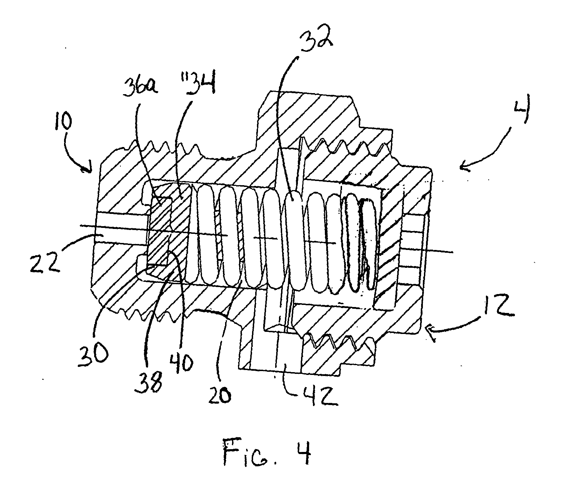

FIG. 4 illustrates another embodiment of the valve 4. The numbering of the elements of the drawing is the same as that of FIG. 2, except with differences denoted as double prime ("). In this embodiment, which incorporates a sealing element 36a and a pin 38, the pin 38 performs the function of the thermal element "34. As noted above, the pin 38 may include a receptacle 40 to receive the sealing element 36a. To provide thermal relief, when the predetermined temperature is reached, the pin 38 will melt. The spring 32 decompresses, and the sealing element 36a thus is no longer biased against the pathway 22. The excess thermal pressure may enter the chamber 20 and exit through the exitway 42. The operation of the valve 4 with respect to pressure relief is generally the same as that described above.

Note that in a preferred embodiment, the thermal element is made of a material so that it melts in approximately 90 seconds when the temperature reaches a predetermined temperature of approximately 281 degrees Fahrenheit. In other embodiments, however, the thermal element may be of a material that melts in a greater or lesser amount of time, depending on specification requirements, and the predetermined temperature may be varied. Depending on specification requirements and the type of spring used, the valve may be actuated when the thermal element fully or partially melts.

The above described valve provides several advantages over other types of valves that provide thermal and pressure relief. For example, some other devices use a fusible plug that blocks and seals an outlet passage in a container. Once the temperature surrounding the container reaches the yield point of the plug, the plug melts and pressure forces the melted plug out through the passage, thus allowing the pressure in the container to escape. These fusible plugs, however, are subject to extrusion failures when exposed to high pressures. In contrast, the present valve incorporates a seal between the container and the thermal element. The thermal element, therefore, is not exposed to high pressures, and thus operates independently of pressure. The probability of an extrusion failure is therefore greatly reduced.

The present valve also requires only one device to provide thermal and pressure relief. Other systems may use both a pressure relief valve and a thermal fuse. Thus, in addition to overcoming the problems associated with fusible plugs, the present valve provides the advantage of requiring a container adapted for one relief device, rather than two.

By way of further example, in embodiments that incorporate a sealing element received within a pin, the parts are reusable with the exception of the thermal element. This in turn provides the advantage of requiring fewer replacement parts, thus lowering the costs associated with the valve.

While the above description constitutes the preferred embodiments of the present invention, it will be appreciated that the invention is susceptible of modification, variation, and change without departing from the proper scope and fair meaning of the accompanying claims.

## Claims

1. A combination thermal and pressure relief valve, comprising:
a first housing (10) having an opening at a first end (15) and a pathway (22) extending towards the opening from a second end (24) of the first housing;
a second housing (12) partially received in the opening (14) of the first housing, the first and the second housing defining a chamber (20) adjacent the pathway (22);
an exitway (42) extending from the chamber and providing an exit to an exterior of the valve;
a bearing element (30) within the chamber and adjacent the pathway, the bearing element being larger then the width of the pathway;
a spring (32) under compression within the chamber and in line with the bearing element; and
a thermal element (34) within the chamber between the second housing (12) and the spring (32), the thermal element being in line with the spring and melting at a predetermined temperature, the thermal element not blocking any exit to an exterior of the valve when the valve is unactuated;
**characterised in that** the spring (32) is biased against the thermal element (34) when the valve (32) is unactuated and exerts a force on the bearing element such that the bearing element is biased against the pathway and forms a seal between the chamber and the pathway.

2. A combination thermal and pressure relief valve as claimed in claim 1, **characterised in that** the second housing (12) further includes an opening (34), and wherein the openings of the first and the second housings define the chamber (20).

3. A combination thermal and pressure relief valve as claimed in claim 1, **characterised in that** the exitway (42) is adjacent the second housing (12).

4. A combination thermal and pressure relief valve as claimed in claim 1, **characterised in that** the bearing element (30) includes at least in part a sealing element (36a), the sealing element being adjacent to the pathway (22).

5. A combination thermal and pressure relief valve as claimed in claim 4, **characterised in that** the bearing element (30) further comprises a pin (38) adjacent to the sealing element (36a).

6. A combination thermal and pressure relief valve as claimed in claim 5, **characterised in that** the pin (38) is adjacent the spring (32).

7. A combination thermal and pressure relief valve as claimed in claim 5, **characterised in that** the pin (38) further includes a head (46) having a receptacle that receives the sealing element (36a).

8. A combination thermal and pressure relief valve as claimed in claim 5, **characterised in that** the pin (38) is made of brass.

9. A combination thermal and pressure relief valve as claimed in claim 1, **characterised in that** the thermal element (34) is made of a eutectic material.

10. A combination thermal and pressure relief valve as claimed in claim 1, **characterised in that** the thermal element (34) is made of a low melting-point alloy.

11. A combination thermal and pressure relief valve as claimed in claim 1, **characterised in that** the first housing (10) and includes interior threads (16) and the second housing (12) includes exterior threads (18) that engage with the interior threads of the first housing.

12. A combination thermal and pressure relief valve as claimed in claim 1, **characterised in that** the first housing (10) and the second housing (12) are made of brass.

13. A combination thermal and pressure relief valve as claimed in claim 1, **characterised in that** the spring (32) is made of stainless steel.

14. A combination thermal and pressure relief valve as claimed in claim 1, **characterised in that** the thermal element (34) is adjacent the second end of the spring (38).

15. A pressurized container, comprising:
a container (2) containing a fluid under pressure; and a pressure and thermal relief valve (4) as claimed in claim 1 attached to and in fluid communication with the container.

16. A pressurised container as claimed in claim 15, **characterised in that** the second housing (12) further includes an opening (34), and wherein the openings of the first and the second housings define the chamber (20).

17. A pressurised container as claimed in claim 15, **characterised in that** the valve (4) further comprises a shoulder (28) that contacts an outer wall of the container.

18. A pressurised container as claimed in claim 17, **characterised in that** the exitway (42) is between the second housing (12) and the shoulder (28).

19. A pressurised container as claimed in claim 17, **characterised in that** the container (2) further includes a manifold (3) at a top of the container, and wherein the valve (4) is attached with the manifold.

20. A pressurised container as claimed in claim 17, **characterised in that** the first housing (10) includes exterior threads (13) and the manifold (32) includes interior threads that engage with the exterior threads of the first housing.

21. A pressurised container as claimed in claim 15, **characterised in that** the thermal element (34a) is adjacent the second end of the spring (32).

22. A pressurised container as claimed in claim 15, **characterised in that** the thermal element (34a) is made of eutectic material.

23. A pressurised container as claimed in claim 15, **characterised in that** the thermal element (34c) is made of low melting-point alloy.

24. A pressurised container as claimed in claim 15, **characterised in that** the first housing (10) includes interior threads (16) and the second housing (12) includes exterior threads (18) that engage with the interior threads of the first housing.

25. A pressurised container as claimed in claim 15, **characterised in that** the first housing (10) and the second housing (12) of the relief valve are made of brass.

26. A pressurised container as claimed in claim 15, wherein the spring (32) of the relief valve is made of stainless steel.

## Patentansprüche

1. Wärme- und Druckentlastungskombinationsventil umfassend:
ein erstes Gehäuse (10) mit einer Öffnung an einem ersten Ende (15) und einer Leitung (22), die sich durch die Öffnung von einem zweiten Ende (24) des ersten Gehäuses erstreckt,
ein zweites Gehäuse (12), das teilweise in der Öffnung (14) des ersten Gehäuses aufgenommen ist, wobei das erste und das zweite Gehäuse eine Kammer (20) benachbart zu der Leitung (22) definieren,
eine Ausgangsleitung (42), die sich von der Kammer erstreckt und einen Ausgang an ein Äußeres des Ventils bereitstellt,
ein Lagerelement (30) innerhalb der Kammer und benachbart zu der Leitung, wobei das Lagerelement größer ist, als die Breite der Leitung,
eine Feder (32), zusammengedrückt innerhalb der Kammer und ausgerichtet mit dem Lagerelement, und
ein Wärmeelement (34) innerhalb der Kammer zwischen dem zweiten Gehäuse (12) und der Feder (32), wobei das Wärmeelement ausgerichtet ist mit der Feder und bei einer vorbestimmten Temperatur schmilzt, wobei das Wärmeelement keinen Ausgang zu einem Äußeren des Ventils blockiert, wenn das Ventil nicht betätigt ist,
**dadurch gekennzeichnet, dass** die Feder (32) gegen das Wärmeelement (34) vorgespannt ist, wenn das Ventil (32) unbetätigt ist und eine Kraft auf das Lagerelement ausübt, so dass das Lagerelement gegen die Leitung vorgespannt ist und eine Dichtung zwischen der Kammer und der Leitung bildet.

2. Wärme- und Druckentlastungskombinationsventil nach Anspruch 1, **dadurch gekennzeichnet, dass**
das zweite Gehäuse weiter eine Öffnung (34) umfasst und wobei die Öffnungen des ersten und zweiten Gehäuses die Kammer (20) definieren.

3. Wärme- und Druckentlastungskombinationsventil nach Anspruch 1, **dadurch gekennzeichnet, dass**
die Ausgangsleitung (42) benachbart zu dem zweiten Gehäuse (12) ist.

4. Wärme- und Druckentlastungskombinationsventil nach Anspruch 1, **dadurch gekennzeichnet, dass**
das Lagerelement (30) zumindest teilweise ein Dichtungselement (36a) umfasst, wobei das Dichtungselement benachbart zu der Leitung (22) ist.

5. Wärme- und Druckentlastungskombinationsventil nach Anspruch 4, **dadurch gekennzeichnet, dass**
das Lagerelement (30) weiter einen Stift (38) umfasst, benachbart zu dem Dichtungselement (36a).

6. Wärme- und Druckentlastungskombinationsventil nach Anspruch 5, **dadurch gekennzeichnet, dass**
der Stift (38) benachbart zu der Feder (32) ist.

7. Wärme- und Druckentlastungskombinationsventil nach Anspruch 5, **dadurch gekennzeichnet, dass**
der Stift (38) weiter einen Kopf (46) mit einer Aufnahme, die das Dichtungselement (36a) aufnimmt, umfasst.

8. Wärme- und Druckentlastungskombinationsventil nach Anspruch 5, **dadurch gekennzeichnet, dass**
der Stift (38) aus Messing hergestellt ist.

9. Wärme- und Druckentlastungskombinationsventil nach Anspruch 1, **dadurch gekennzeichnet, dass**
das Wärmeelement (34) aus einem eutektischen Material hergestellt ist.

10. Wärme- und Druckentlastungskombinationsventil nach Anspruch 1, **dadurch gekennzeichnet, dass**
das Wärmeelement (34) aus einer Legierung mit einem niedrigen Schmelzpunkt hergestellt ist.

11. Wärme- und Druckentlastungskombinationsventil nach Anspruch 1, **dadurch gekennzeichnet, dass**
das erste Gehäuse (10) ein Innengewinde (16) umfasst und das zweite Gehäuse (12) ein Außengewinde (18) umfasst, das mit dem Innengewinde des ersten Gehäuses im Eingriff steht.

12. Wärme- und Druckentlastungskombinationsventil nach Anspruch 1, **dadurch gekennzeichnet, dass**
das erste Gehäuse (10) und das zweite Gehäuse (12) aus Messing hergestellt sind.

13. Wärme- und Druckentlastungskombinationsventil nach Anspruch 1, **dadurch gekennzeichnet, dass**
die Feder (32) aus rostfreiem Stahl hergestellt ist.

14. Wärme- und Druckentlastungskombinationsventil nach Anspruch 1, **dadurch gekennzeichnet, dass**
das Wärmeelement (34) benachbart zu dem zweiten Ende der Feder (38) ist.

15. Druckbeaufschlagter Behälter umfassend:
einen Behälter (2), der ein druckbeaufschlagtes Fluid beinhaltet und
ein Wärme- und Druckentlastungskombinationsventil (4) nach Anspruch 1, das an dem Behälter befestigt ist und mit diesem in fluidischer Kommunikation steht.

16. Druckbeaufschlagter Behälter nach Anspruch 15, **dadurch gekennzeichnet, dass**
das zweite Gehäuse (12) weiter eine Öffnung (34) umfasst und wobei die Öffnungen des ersten und zweiten Gehäuses die Kammer (20) definieren.

17. Druckbeaufschlagter Behälter nach Anspruch 15, **dadurch gekennzeichnet, dass**
das Ventil (4) weiter eine Schulter (28) umfasst, die eine äußere Wand des Behälters kontaktiert.

18. Druckbeaufschlagter Behälter nach Anspruch 17, **dadurch gekennzeichnet, dass**
die Ausgangsleitung (42) zwischen dem zweiten Gehäuse (12) und der Schulter (28) liegt.

19. Druckbeaufschlagter Behälter nach Anspruch 17, **dadurch gekennzeichnet, dass**
der Behälter (2) weiter einen Verteiler (3) an einem Oberteil des Behälters umfasst und wobei das Ventil (4) an dem Verteiler befestigt ist.

20. Druckbeaufschlagter Behälter nach Anspruch 17, **dadurch gekennzeichnet, dass**
das erste Gehäuse (10) ein Außengewinde (13) umfasst und der Verteiler (32) ein Innengewinde umfasst, das mit dem Außengewinde des ersten Gehäuses im Eingriff steht.

21. Druckbeaufschlagter Behälter nach Anspruch 15, **dadurch gekennzeichnet, dass**
das Wärmeelement (34a) benachbart zu dem zweiten Ende der Feder (32) ist.

22. Druckbeaufschlagter Behälter nach Anspruch 15, **dadurch gekennzeichnet, dass**
das Wärmeelement (34a) aus einem eutektischen Material hergestellt ist.

23. Druckbeaufschlagter Behälter nach Anspruch 15, **dadurch gekennzeichnet, dass**
das Wärmeelement (34c) aus einer Legierung mit einem geringen Schmelzpunkt hergestellt ist.

24. Druckbeaufschlagter Behälter nach Anspruch 15, **dadurch gekennzeichnet, dass**
das erste Gehäuse (10) ein Innengewinde (16) umfasst und das zweite Gehäuse (12) ein Außengewinde (18) umfasst, das mit dem Innengewinde des ersten Gewindes des ersten Gehäuses im Eingriff steht.

25. Druckbeaufschlagter Behälter nach Anspruch 15, **dadurch gekennzeichnet, dass**
das erste Gehäuse (10) und das zweite Gehäuse (12) des Entlastungsventils aus Messing hergestellt sind.

26. Druckbeaufschlagter Behälter nach Anspruch 15, wobei die Feder (32) des Entlastungsventils aus einem rostfreien Stahl hergestellt ist.

## Revendications

1. Soupape de décharge thermique et de détente de pression combinée, comprenant :
un premier logement (10) comportant une ouverture au niveau d'une première extrémité (15) et une voie de passage (22) s'étendant vers l'ouverture à partir d'une seconde extrémité (24) du premier logement ;
un second logement (12) reçu partiellement dans l'ouverture (14) du premier logement, le premier et le second logement définissant une chambre (20) adjacente à la voie de passage (22) ;
une voie de sortie (42) s'étendant à partir de la chambre et fournissant une sortie vers un extérieur de la soupape ;
un élément de palier (30) à l'intérieur de la chambre et adjacent à la voie de passage, l'élément de palier étant plus grand que la largeur de la voie de passage ;
un ressort (32) sous compression à l'intérieur de la chambre et en ligne avec l'élément de palier ; et
un élément thermique (34) à l'intérieur de la chambre entre le second logement (12) et le ressort (32), l'élément thermique étant en ligne avec le ressort et fondant à une température prédéterminée, l'élément thermique ne bloquant aucune sortie vers un extérieur de la soupape lorsque la soupape n'est pas actionnée ;
**caractérisée en ce que** le ressort (32) est sollicité contre l'élément thermique (34) lorsque la soupape (32) n'est pas actionnée et exerce une force sur l'élément de palier de sorte que l'élément de palier soit sollicité contre la voie de passage et forme un joint entre la chambre et la voie de passage.

2. Soupape de décharge thermique et de détente de pression combinée selon la revendication 1, **caractérisée en ce que** le second logement (12) comprend en outre une ouverture (34), et dans laquelle les ouvertures des premier et second logements définissent la chambre (20).

3. Soupape de décharge thermique et de détente de pression combinée selon la revendication 1, **caractérisée en ce que** la voie de sortie (42) est adjacente au second logement (12).

4. Soupape de décharge thermique et de détente de pression combinée selon la revendication 1, **caractérisée en ce que** l'élément de palier (30) comprend au moins en partie un élément d'étanchéité (36a), l'élément d'étanchéité étant adjacent à la voie de passage (22).

5. Soupape de décharge thermique et de détente de pression combinée selon la revendication 4, **caractérisée en ce que** l'élément de palier (30) comprend en outre une goupille (38) adjacente à l'élément d'étanchéité (36a).

6. Soupape de décharge thermique et de détente de pression combinée selon la revendication 5, **caractérisée en ce que** la goupille (38) est adjacente au ressort (32).

7. Soupape de décharge thermique et de détente de pression combinée selon la revendication 5, **caractérisée en ce que** la goupille (38) comprend en outre une tête (46) comportant un réceptacle qui reçoit l'élément d'étanchéité (36a).

8. Soupape de décharge thermique et de détente de pression combinée selon la revendication 5, **caractérisée en ce que** la goupille (38) est faite de laiton.

9. Soupape de décharge thermique et de détente de pression combinée selon la revendication 1, **caractérisée en ce que** l'élément thermique (34) est fait d'un matériau eutectique.

10. Soupape de décharge thermique et de détente de pression combinée selon la revendication 1, **caractérisée en ce que** l'élément thermique (34) est fait d'un alliage ayant un point de fusion bas.

11. Soupape de décharge thermique et de détente de pression combinée selon la revendication 1, **caractérisée en ce que** le premier logement (10) comprend des filets intérieurs (16) et le second logement (12) comprend des filets extérieurs (18) qui entrent en prise avec les filets intérieurs du premier logement.

12. Soupape de décharge thermique et de détente de pression combinée selon la revendication 1, **caractérisée en ce que** le premier logement (10) et le second logement (12) sont faits de laiton.

13. Soupape de décharge thermique et de détente de pression combinée selon la revendication 1, **caractérisée en ce que** le ressort (32) est fait d'acier inoxydable.

14. Soupape de décharge thermique et de détente de pression combinée selon la revendication 1, **caractérisée en ce que** l'élément thermique (34) est adjacent à la seconde extrémité du ressort (38).

15. Récipient sous pression, comprenant :
un récipient (2) contenant un fluide sous pression ;
et une soupape de décharge thermique et de détente de pression (4) selon la revendication 1 fixée à et en communication fluide avec le récipient.

16. Récipient sous pression selon la revendication 15, **caractérisé en ce que** le second logement (12) comprend en outre une ouverture (34), et dans lequel les ouvertures des premier et second logements définissent la chambre (20).

17. Récipient sous pression selon la revendication 15, **caractérisé en ce que** la soupape (4) comprend en outre un épaulement (28) qui entre en contact avec une paroi extérieure du récipient.

18. Récipient sous pression selon la revendication 17, **caractérisé en ce que** la voie de sortie (42) se trouve entre le second logement (12) et l'épaulement (28).

19. Récipient sous pression selon la revendication 17, **caractérisé en ce que** le récipient (2) comprend en outre un distributeur (3) au niveau d'une partie supérieure du récipient, et dans lequel la soupape (4) est fixée au distributeur.

20. Récipient sous pression selon la revendication 17, **caractérisé en ce que** le premier logement (10) comprend des filets extérieurs (13) et le distributeur (32) comprend des filets intérieurs qui entrent en prise avec les filets extérieurs du premier logement.

21. Récipient sous pression selon la revendication 15, **caractérisé en ce que** l'élément thermique (34a) est adjacent à la seconde extrémité du ressort (32).

22. Récipient sous pression selon la revendication 15, **caractérisé en ce que** l'élément thermique (34a) est fait de matériau eutectique.

23. Récipient sous pression selon la revendication 15, **caractérisé en ce que** l'élément thermique (34c) est fait d'un alliage ayant un point de fusion bas.

24. Récipient sous pression selon la revendication 15, **caractérisé en ce que** le premier logement (10) comprend des filets intérieurs (16) et le second logement (12) comprend des filets extérieurs (18) qui entrent en prise avec les filets intérieurs du premier logement.

25. Récipient sous pression selon la revendication 15, **caractérisé en ce que** le premier logement (10) et le second logement (12) de la soupape de décharge sont faits de laiton.

26. Récipient sous pression selon la revendication 15, dans lequel le ressort (32) de la soupape de décharge est fait d'acier inoxydable.
